(19) Europäisches Patentamt
European Patent Office
Office européen des brevets

(11) **EP 4 593 296 A1**

(12) **EUROPEAN PATENT APPLICATION**

(43) Date of publication:
**30.07.2025 Bulletin 2025/31**

(21) Application number: **25154172.8**

(22) Date of filing: **27.01.2025**

(51) International Patent Classification (IPC):
***H04B 1/10*** *(2006.01)* ***H04B 1/12*** *(2006.01)*
***H04B 1/525*** *(2015.01)*

(52) Cooperative Patent Classification (CPC):
**H04B 1/525; H04B 1/1027; H04B 1/109; H04B 1/123**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.01.2024 US 202463626191 P**

(71) Applicant: **Mavenir Systems, Inc.**
**Richardson, TX 75081 (US)**

(72) Inventors:
- **Yuan, Jin**
  **Plano, Texas 75025 (US)**
- **Halfyard, Gary**
  **West Yorkshire, BD17 5AJ (GB)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **METHOD AND APPARATUS FOR PASSIVE INTERMODULATION (PIM) INTERFERENCE CANCELLATION IN DUAL-BAND WIRELESS NETWORK**

(57) A system providing passive intermodulation (PIM) interference cancellation in dual-band wireless network by utilizing a regular Tx and Rx as inputs for cancellation modeling. The system doesn't require an additional feedback circuit for modelling, making the circuits simple, cost-effective, and stable performance. It is proposed to use dual band modeling to apply separate dual-band PIM nonlinearity modeling, avoiding dealing with extremely high sampling rate with the conventional solution, where the dual bands are treated as a single band. The proposed approach makes the dual band PIM cancellation feasible. The system performing PIMI and PIMC filtering only on the UL band and decimates the cancellation sampling rate, the system performing: UL band modeling and cancellation by filtering out the unwanted spectrum, such as the transition band, and DL bands; and down-sampling on the filtered signal to further reduce the complexity and resource utilization.

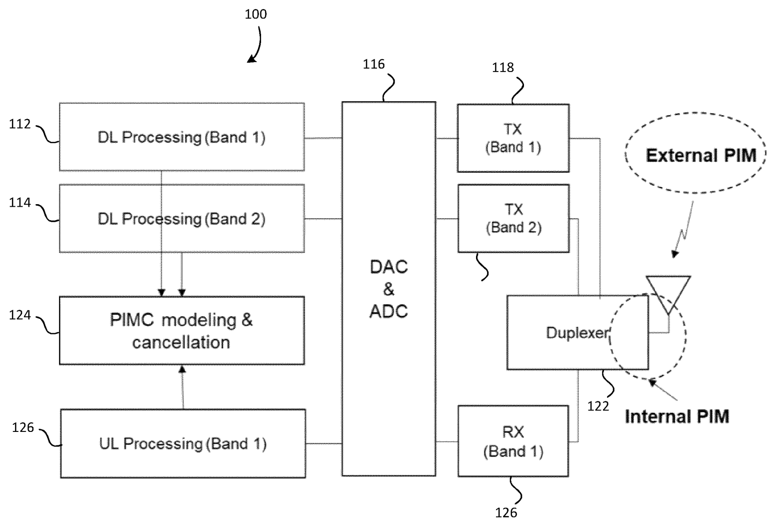


FIG. 1



Processed by Luminess, 75001 PARIS (FR)

## Description

BACKGROUND

1. Field of the Disclosure

The present disclosure is related to 5G networks. More particularly, the present disclosure relates to passive intermodulation (PIM) interference cancellation in dual-band wireless network.

2. Description of Related Art

Passive intermodulation (PIM) is the non-linear product caused by non-linear characteristics of passive components, such as filters, connectors, and antenna elements. PIM is the result of unwanted signals created by the mixing of two or more frequencies in a non-linear passive device. These new signals can interfere with and even distort the original signal in a Radio Frequency (RF) system.

Many passive components show non-linear transmission characteristics due to various reasons, for example, the non-linear feature of ferrite, which are widely used in RF components, and the non-linear product due to the junction of two different metals, which happens at the interaction of machinal components. RF circuits, particularly for base stations, within the RF feed sub-system after PA (e.g., a duplexer through to antenna elements) can create serious PIM products due to high-power levels in these stages of circuits. When the PIM products fall into one or more Uplink (UL) bands, they become interference to the signal reception and must be handled properly. To ensure reliable communications performance, PIM distortion must be limited or eliminated.

As technology has evolved in advanced B4G and 5G eras, spectrum management also becomes more and more complicated. It is required that modern base stations support two or more frequency bands. Dual-band design enhances base stations in both capability and flexibility. Unfortunately, PIM products in the dual-band base station are convoluted in terms of frequency band locations, and more likely become interference to the interested UL bands.

It would be advantageous to provide technology for cancelling interference caused by the PIM product in a dual band setup. However, there are difficult design issues that have, to date, prevented this advantageous outcome.

A first major technological challenge is the availability of suitable observation of the non-linear products that allows the nonlinearity to be modelled. The first problem is that high power PIM products are generated in the RF feed sub-system right before the signal is radiated from antenna elements, at which point it is difficult to equip a feedback circuit to help model the PIM products in a linear way. The inclusion of extra circuits/circuitry at this stage disadvantageously reduces the output power, which is critical in a transmission design. As such, it is impractical to equip feedback circuitry (Receiver front-end) at this point, per traditional cancellation solutions.

A second major technological challenge is the extremely high sample rates and bandwidths that are generally required to support such modelling within an RU signal processing (required to mitigate any interference on the received signal). The second problem occurs because of the dual-band setup. It is either impossible or prohibitively expensive to direct model PIM nonlinearity on the combined (DL) signal because the combined signal is of such large bandwidth. The spectrum of the combined Downlink (DL) signal starts from the left boundary of the band with lower frequency and ends at the right boundary of the other band with higher frequency. For example, in the B1 & B3 dual band case (Table 1 shows the Band 1 (B1) & Band 3 (B3) band range), the combined DL signal has the spectrum from 1805MHz to 2170MHz, with bandwidth of 365MHz. The bandwidth of the combined DL signal is too large to model the nonlinearity with a moderate sampling rate and processing complexity. For the B1 & B3 dual-band case, to model the 5th order nonlinearity in the PIM modeling over the full band would require at least 1.825GHz sampling rate.

Table 1 B1 & B3 dual band.

| | UL (MHz) | DL (MHz) |
|---|---|---|
| B1 | 1920 - 1980 | 2110-2170 |
| B3 | 1710 - 1785 | 1805- 1880 |

A third technological problem relates to using Receiving (Rx) circuits as the PIM modeling feedback path. The received signal spectrum comprises many components. To precisely model the received signal and perform the desired cancellation required, exceeds the available Field Programmable Gate Array (FPGA) resources. The channel response from the Transmission (Tx) baseband all the way to Rx baseband varies widely in magnitude, delay, and phase along the frequency axis. It passes through different channel responses for DL bands, UL bands, and transient bands. This is due to the filtering characteristics of the duplexer. It should be noted that, even at the receiver, the Power Spectrum Density (PSD) of the DL band might be still higher than that of the UL band, depending on the isolation provided by the duplexer. Consequently, the received signal spectrum comprises numerous components. To precisely model the received signal and perform the desired cancellation requires exceeds the available FPGA resources.

Various prior art systems do not adequately address the above-stated technological challenges. For example, European Patent No. EP2880767B1/ US 13/565,167 (PA1) entitled "Low complexity all-digital PIM compensator" is focused on a single DL baseband instead of dual/multiple basebands in the PIM compensation. Additionally, PA1 proposes multiple feedback path points, proposes a Least Mean Square (LMS) method for non-linear based equalization, and proposes delay detection for single Tx at the baseband. A major drawback to PA1 is that in the PIM signal generation module, no Digital Up Conversation / Digital Down Conversation (DUC / DDC) is applied, which means either: (1) the processing bandwidth is extremely large; or (2) the DL signal could be seen in the RX signal. The two points are not applicable to the dual band case where UL and DL gap is much greater than in single band cases, and the DL signal cannot be seen in the RX signal. Additionally, LMS requires high computational complexity.

U.S. Patent No. 9,026,064B2 (PA2) entitled, "Dynamic cancellation of passive intermodulation interference" proposes using an analysis circuit and an estimation circuit to identify the PIM system parameters and generate PIM signal estimation by applying the identified coefficients onto the composite signal. PA2 further proposes a specific test signal and dedicated testing slot be used to isolate the effect of PIM interference to any other received signal. Note that the dedicated testing stage is not scheduled to receive any other signal. PA2 further provides memoryless nonlinearity modelling for PIM interference and LS parameter identification. In some cases, band pass filtering is proposed when the receiver is of limited bandwidth. Again, PA2 is not directed to, nor does it consider the problems associated with, dual band PIM cancellation. The memoryless model will not work because PIM interference will go through the duplexer and RX channel, and the delay might not be constant with frequency. Likewise, the Tx and Rx implicitly are configured with different carrier frequencies, and non-linear components in dual band cases, might have carrier frequency differing from the Tx carrier.

Patent No. WO2013175194A2 (PA3) entitled, "Detection of Intermodulation Products", proposes a method of detecting passive intermodulation (PIM) products and the PIM modelling is using dual band modelling. However, the system and method of PA3 fails to account for the baseband intermodulation products aligning in frequency with the received signal. PA3 not only fails to provide for dual-band nonlinearity modelling and frequency shifting, but also filtering and decimation before the system identification. Filtering and decimation are important because the system identification memory length could be reduced by doing so.

U.S. Patent Application Publication No. 2013/0310090A1 (PA4) entitled, "Method and Apparatus for Reduction of Intermodulation Products" uses primitive dual-band modelling applied by using signal 1 and signal 2 bust does not consider multiple terms at f1 and f2 that could possibly interfere with the UL bands. PA 4 has a PIM cancellation algorithm that is designed to cancel out 3rd order products that fall into interested uplink bands. Delays at different stages are proposed, however, since PIM interference will go through duplexer and Rx channel, the delay may not be constant with frequency. The PIM cancellation considers the remote PIM, of which the PIM source is outside the base station. Additionally, PIM cancellation in MIMO and external PIM are considered. PA4 does not consider multiple terms at f1 and f2 that could possibly interfere with the UL bands. PA4 does not consider delay differences between two DL signals.

Accordingly, there is a need for a control system that overcomes, alleviates, and/or mitigates one or more of the aforementioned and other deleterious effects of prior art systems.

## SUMMARY

Accordingly, it would be advantageous to provide a control system for use in wireless telecom systems that provides for suitable observation of the non-linear products that allows nonlinearity to be modelled without adding additional feedback circuits due to cost concern.

It is further desired to provide a control system for use in wireless telecom systems that allows for modeling PIM products, which is feasible with appropriate sampling rate even for the dual-band system, where the band width for the combined two bands is extremely large.

It is still further desired to provide a control system for use in wireless telecom systems using a dual-band setup that does not reduce system identification memory length.

It is yet further desired to provide a control system for use in wireless telecom systems using a dual-band setup that is adapted to account for delay differences between two DL signals.

The first technical challenge. This relates to high power PIM products generated in the RF feed sub-system just prior to the signal being transmitted from antenna elements. As stated, it is difficult to equip a feedback circuit to model PIM products at this point due to the propensity of these circuits to unacceptably reduce the output power.

Solution: Use the regular Tx as an input to cancellation modeling such that dedicated feedback circuitry is not needed. Accordingly, it is contemplated that novel signal processing techniques can be used to minimize the bandwidth and the sample rates required for modelling the PIM interference by modelling each non-linear term separately using existing baseband (i.e., low sample rate) of each DL signal and using a combination of these terms for optimum benefit over the limited bandwidth of the impacted UL.

The existing baseband UL signal is used for observation of the PIM interference and the algorithm accounts for the presence of the "wanted" UL signal as well as the "unwanted" PIM interferer. In one configuration, it is contemplated to directly use the regular Tx as an input for the PIM modelling. As a result, a dedicated feedback, which is equipped in the traditional cancellation solution, is not needed.

The second technical challenge. This relates to the dual band structure that makes it extremely expensive for direct modelling the PIM nonlinearity on the combined (DL) signal because of the very large bandwidth of the combined signal where modeling the 5th order nonlinearity in the PIM over the full band is not practical (e.g., requires at least 1.825GHz sampling rate).

Solution: Use dual band PIM modelling. It is proposed to apply separate dual-band PIM nonlinearity modeling to reduce the required sampling. The PIM nonlinearity modelling could be accomplished with a few nonlinearity terms, each of which has a comparably "narrow" bandwidth. As such, the processing requirements for the narrowed modelling can be greatly reduced.

As one example, per Table 1 describing B1 & B3 dual band, for the traditional solution, the bandwidth of the combined DL signal is 365MHz. The BW of the 3rd and 5th order are 1110MHz and 1850MHz, respectively. It requires >2000MHz sampling rate to process, which is nearly impossible or so expensive and complex to commission that it is not a commercially viable solution. For the proposed solution, two third-order intermodulation (IM3) terms and four fifth-order intermodulation (IM5) terms must be considered by applying the separate dual-band PIM nonlinearity modelling. The maximum bandwidth of these terms is 360MHz, which could be handled with moderate sampling rate and reduced resource utilization.

**The third technical** challenge. This relates to using Rx circuits as the PIM modeling feedback path. The spectrum of the Rx signal is complicated, including the PIM interference, high power in the B3 DL to UL transition band, B3 DL leakage, and B1 DL leakage. The noise floor is underneath the interference. Precise modeling of the received signal along with PIM cancelation exceeds available FPGA resources as the channel response from the Tx baseband to Rx baseband varies widely in magnitude, delay, and phase along the frequency axis.

Solution: Perform PIM cancellation on the UL band only. Accordingly, it is proposed to perform PIM Identification (PIMI) and PIM Cancellation (PIMC) filtering only on the UL band and decimate the cancellation sampling rate to mitigate the processing complexity and reduce the resource utilization. A two-step process can be used to mitigate the processing complexity and reduce resource utilization. First, UL band modeling and cancellation is performed by filtering out the unwanted spectrum, which includes the transition band and DL bands. Second, down-sampling is performed to remove data points from the filtered signal to further reduce the complexity and resource utilization.

For this application the following terms and definitions shall apply:

The term "down-sampling" as used herein means the process of reducing the sampling rate of a signal.

The term "decimation" as used herein means the process of reducing the sampling rate of a signal by a value and don't distort the interested spectrum of the signal by applying a decimation filter. Decimation works by merging every N sample into one. The decimation factor is an integer or a rational fraction greater than one.

The term "data" as used herein means any indicia, signals, marks, symbols, domains, symbol sets, representations, and any other physical form or forms representing information, whether permanent or temporary, whether visible, audible, acoustic, electric, magnetic, electromagnetic or otherwise manifested. The term "data" as used to represent predetermined information in one physical form shall be deemed to encompass any and all representations of the same predetermined information in a different physical form or forms.

The term "passive intermodulation (PIM)" as used herein means a form of distortion/signal interference that occurs when two or more signals mix in a passive, unpowered component, such as a cable, connector, fastener or the like.

The term "third-order intermodulation (IM3) distortion" as used herein is a measure of distortion in a nonlinear device when two signals with similar frequencies are present.

The term "fifth-order intermodulation (IM5) distortion" as used herein is a measure of distortion in a nonlinear device when two signals with similar frequencies are present.

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

The term "automatic" and variations thereof, as used herein, refers to any process or operation done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

In one configuration, a method for providing passive intermodulation (PIM) interference cancellation in dual-band wireless 5G networks is provided comprising the steps of identifying a PIM source generating PIM interference and performing frequency analysis to determine a set of terms for modelling the PIM source. The method further comprises the steps of scoping sample rate, frequency offsets, non-linear functions, filtering, equalizer and model identification operations, and detecting a presence of PIM interference in an UpLink (UL) signal and perform estimation delays. The method still further comprises the steps of performing PIM identification (PIMI) on PIM coefficients to combine non-linear terms to match the detected PIM interference and generating a filtered signal by performing real-time PIM cancellation (PIMC) by subtraction in the time-domain of the modelled PIM interference.

The above-described and other features and advantages of the present disclosure will be appreciated and understood by those skilled in the art from the following detailed description, drawings, and appended claims.

## DESCRIPTION OF THE DRAWINGS

FIG. 1 is a block diagram illustrating the PIM product and PIMC system architecture according to one configuration of the invention.

FIG. 2A is a block diagram of prior art cancellation solutions in which a dedicated feedback circuit is used.

FIG. 2B is a block diagram of the PIMC solution according to the system of FIG. 1.

FIG. 3A is a nonlinearity model for single band nonlinearity modeling.

FIG. 3B is a nonlinearity model for separate dual band PIM nonlinearity modeling.

FIG. 4 is an illustration of the spectrum of the Rx signal, taking B3 Rx as an example according to the system FIG. 1.

FIG. 5 is a block diagram of PIM cancellation functionality partitioning according to the system FIG. 1.

FIG. 6 a block diagram of PIM Identification (PIMI) block diagram according to the system FIG. 5.

FIG. 7 a block diagram of PIM Cancellation (PIMC) block diagram according to the system FIG. 5.

FIG. 8 is an illustration of PIMC performance comparison for filtering and decimation according to the system of FIG. 1.

## DETAILED DESCRIPTION

Referring now to the drawings, wherein like reference numerals designate corresponding structure throughout the views.

FIG. 1 is a block diagram of one configuration of the system 100 according to the present disclosure. As previously stated, PIM occurs at the end of the Tx chain, including the duplexer, connectors, and antennas making it infeasible to equip a feedback front-end at that point. The solution of FIG. 1 is to use the regular Tx as an input to PIM modelling, which results in no need for dedicated feedback circuitry for cancellation modeling.

FIG. 1 includes DL Processing (Band 1) 112, DL Processing (Band 2) 114, each of which are connected to Digital to Analog Converter (DAC) & Analog to Digital Converter (ADC) 116. TX (Band 1) 118 and TX (Band 2) 120 are both connected to DAC & ADC 116. Both TX (Band 1) 118 and TX (Band 2) 120 are connected to Duplexer 122.

DL Processing (Band 1) 112, DL Processing (Band 2) 114 each provide an input to PIMC modeling and cancellation 124. RX (Band 1) 126 is connected between Duplexer 122 and DAC & ADC 116. Finally, UL Processing (Band 1) 128 is connected between DAC & ADC 116 and PIMC modeling and cancellation 124.

FIG. 1 shows the PIM product and PIMC system 100 architecture. The proposed PIM cancellation solution assumes that TX of the dual bands are separate. Additionally, DPD modules are deployed in the TX circuit for each band to deal with the nonlinearity of PAs.

PIM could be further catalogued into internal source PIM and external source PIM. The internal source PIM refers to a PIM class of products (nonlinearity) generated in the passive RF components in the cell: duplexer, cavity filter, antenna, connector and so on. The external source PIM refers to PIM generated not in the cell but rather in objects in the surrounding environment, such as reflected PIM products from a metal object close to antennas and so on. It should be noted that the PIM cancellation described herein is focused on solving internal source PIM.

RF circuits, particularly for the base stations, from within the RF feed sub-system after the PA, such as the duplexer through to the antenna elements can create serious PIM product due to the high-power level in these stages of the circuits. When the PIM products fall into one or more UL bands, they become interference to the signal reception and must be mitigated.

It should be noted that the high-power PIM products are generated at the end of the TX chain, including duplexer, connectors, and antennas and as such, it is impractical and costly to equip a feedback circuitry (Receiver front-end) at this point, as per traditional cancellation solutions as depicted in FIG. 1.

The solution shown in FIG. 1 uses the regular TX as an input to the PIM modelling. As a result, no dedicated feedback is needed. FIGS. 2A and 2B further illustrate the differences from prior art systems (FIG. 2A) and the current solution (FIG. 2B). As PIM happens at the end of the TX chain, including the duplexer, connectors, and antennas, it is impossible and costly to equip a feedback front-end (FE). The typical/traditional cancellation solution is shown in FIG. 2A with a dedicated feedback FE equipped for modelling.

The PIM nonlinearity needs to be modelled. As stated previously, it is either impossible or extremely expensive for direct modelling the PIM nonlinearity on the combined (DL) signal, following the traditional solution because the combined (DL) signal has such a large bandwidth. The example shown in Table 1 shows the combined DL signal (the B1 & B3 band range) has the spectrum from 1805MHz to 2170MHz.

Referring to FIGS. 3A - 3C, FIG. 3A shows the combined DL signal 150, the 3$^{rd}$ 152 and 5$^{th}$ 154 order non-linearity are illustrated as boxes. The interfering terms are indexed from 1 to 7 as shown in FIG. 3B.

As can be seen, the combined DL signal has large BW. Looking at B1 & B3 dual band as an example, in the traditional solution, the BW of the combined (DL) signal is 365MHz. The BW of the 3rd and 5th order are 1110MHz and 1850MHz, respectively. It would require >2000MHz sampling rate to process, which is impossible or expensive.

The proposed solution shown in FIG. 3B, proposes separate dual-band PIM nonlinearity modelling. The dual-band PIM nonlinearity modelling could be done with a few terms, each of which has comparably quite narrow bandwidth. The processing requirement for the modelling is therefore greatly lowered. There are a total of six and twelve 3rd and 5th order nonlinearity terms. However, for either B3 UL or B1 UL, two IM3 terms and four IM5 terms need to be considered. Most of the nonlinear terms do not interfere with the UL bands. The maximum BW of these terms is 360MHz, which could be handled with a moderate sampling rate and reduced computational complexity.

Table 2 shows the mathematical form for the interfering terms (kernel functions) looking at the 3rd and 5th order nonlinearity terms.

Table 2

| k | Mathematical form | IM3 or IM5 | $f_k$ |
|---|---|---|---|
| 1 | $g_1(x_1) = x_1\|x_1\|^2$ | IM3 | $f_1$ |
| 2 | $g_2(x_1, x_2) = x_1\|x_2\|^2$ | IM3 | $f_1$ |
| 3 | $g_3(x_1) = x_1\|x_1\|^4$ | IM5 | $f_1$ |
| 4 | $g_5(x_1,x_2) = x_1\|x_1\|^2\|x_2\|^2$ | IM5 | $f_1$ |
| 5 | | IM5 | $2f_1-f_2$ |
| 6 | $g_6(x_1,x_2) = x_1\|x_2\|^4$ | IM5 | $f_1$ |

First, it is assumed there are two bands, $B_1$ and $B_2$. The whole base band is then considered and it is further assumed $B_1$ and $B_2$ locate at zero and $\omega 2\pi\Delta f$, where $\Delta f > 0$ is the carrier frequency interval between the two bands. If we denote the two baseband signals for each of the dual band are $\chi_1$ and $\chi_2$, respectively, then the overall baseband signal can be written as formula 1:

$$x = x_1 + x_2 e^{j\omega t} \qquad (1)$$

We assume that memoryless polynomial model, for which the input and output are x and y, respectively as shown in formulas 2 and 3.

$$y = a_0 + a_1 x + a_3 x|x|^2 + a_5 x|x|^4 + \dots \quad (2)$$

$$\begin{aligned} x|x|^2 &= (x_1 + x_2 e^{j\omega t})|x_1 + x_2 e^{j\omega t}|^2 \\ &= (x_1 + x_2 e^{j\omega t})(x_1 + x_2 e^{j\omega t})(x_1^* + x_2^* e^{-j\omega t}) \\ &= (x_1 + x_2 e^{j\omega t})(|x_1|^2 + x_1 x_2^* e^{-j\omega t} + x_1^* x_2 e^{j\omega t} + |x_2|^2) \\ &= x_1|x_1|^2 + x_1^2 x_2^* e^{-j\omega t} + |x_1|^2 x_2 e^{j\omega t} + x_1|x_2|^2 \\ &+ |x_1|^2 x_2 e^{j\omega t} + x_1|x_2|^2 + x_1^* x_2^2 e^{j2\omega t} + x_2|x_2|^2 e^{j\omega t} \\ &= (x_1|x_1|^2 + 2x_1|x_2|^2) + (x_2|x_2|^2 + 2x_2|x_1|^2)e^{j\omega t} + x_1^2 x_2^* e^{-j\omega t} + x_1^* x_2^2 e^{j2\omega t} \end{aligned} \quad (3)$$

Another design problem arising is that the spectrum of the received signal for both dual-band UL bands are complicated, including PIM interference, high power in the B3 DL to UL transition band, B3 DL leakage, and B1 DL leakage. The noise floor is underneath the interference.

FIG. 4 illustrates the spectrum at B3 Rx input (right before the LNA). The three boxes centered at 1747.5 in FIG. 4 are: the top box is the B3 UL band, on which the process focuses after the filtering; the middle box and the bottom box show the sampling range (first Nyquist zone) of the signal before and after decimation.

Even in the digital domain, the Rx signal with the original sampling rate (491.52MHz) contains most of the above components. To precisely model the received signal and cancel out, it requires a very large amount of FPGA resources. Therefore, a two-step process is proposed to mitigate the processing complexity and reduce the resource utilization. First, the UL band modeling is performed and cancellation by filtering out the unwanted spectrum, such as the transition band, and DL bands. Second, down-sampling on the filtered signal is performed to further reduce the complexity and resource utilization.

Turning now to FIGS. 5-7. FIG. 5 shows the PIMC overall block diagram including PIMD 170, PIMI 180 and PIMC 190. As indicated, collected $x_1(t)$, $x_2(t)$ are input into PIMD 170 as well as collected $r(t)$. Collected $x_1(t)$, $x_2(t)$ and collected $r(t)$ are also input to PIMI 180. The output from PIMD 170 $\tau_1$, $\tau_2$, and delay filters is input to PIMI 180 and PIMC 190. Also input to PIMD 170, PIMI 180 and PIMC 190 are $M$, $g_k(x_1, x_2)$, $f_k$ filters. The $x_1(t)$, $x_2(t)$ data streams and $r(t)$ data streams are also input to PIMC 190. The output of PIMI 180 Memory polynomial coef. Vector $\hat{a}$ is input to PIMC 190. Finally, the output of PIMC 190 comprises PIM cancelled RX data stream $r_c(t)$.

The proposed solution comprises the following steps:

Step 1. Identification of the PIM class or location of the PIM source.

Step 2. Perform frequency analysis to determine the required set of terms for modelling of the PIM source.

Step 3. Scoping of the sample rates, frequency offsets, non-linear functions, filtering, equalizer and model identification operations.

Step 4. PIM Detection (PIMD) 170 to detect the presence of PIM interference and perform estimation of delays.

Step 5. PIM Identification (PIMI) 180 to identify suitable PIM coefficients to optimally combine non-linear terms to match the PIM detected in the UL.

Step 6. PIM Cancellation (PIMC) 190 performs real-time cancellation by subtraction in the time-domain of the modelled PIM interference.

It should be noted that, while various functions and methods have been described and presented in a sequence of steps, the sequence has been provided merely as an illustration of one advantageous embodiment, and that it is not necessary to perform these functions in the specific order illustrated. It is further contemplated that any of these steps can be moved and/or combined relative to any of the other steps. In addition, it is still further contemplated that it may be advantageous, depending upon the application, to utilize all or any portion of the functions described herein.

FIG. 6 is a detailed block diagram for PIMI 180 according to FIG. 5 showing PIMI 180 in greater detail.

FIG. 7 is a detailed block diagram for PIMC 190 according to FIG. 5 showing PIMC 190 in greater detail.

There is a filter and decimation module in the process. It should be noted that the sampling rates in the B1 & B3 cases are 491.52MHz and 122.88MHz, respectively.

Turning now to FIG. 8, a graph illustrates the complexity and resource utilization reduction by performing the filtering and decimation described above. The PIM modelling is using memory polynomial (MP). The memory depth (M) is the key parameter reflecting the complexity and resource utilization. The circled area is the typical PIM cancelation working area, which is ~16dB (for -130dBc PIM) residual error after cancellation. The curves show that the memory depth (M) for filtering & decimation, filtering & non-decimation, and non-filtering & non-decimation are 8, 13, and 32, respectively.

While the present disclosure has been described with reference to one or more exemplary embodiments, it will be understood by those skilled in the art that various changes can be made, and equivalents can be substituted for elements thereof without departing from the scope of the present disclosure. In addition, many modifications can be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

## Claims

1. A method for providing passive intermodulation (PIM) interference cancellation in dual-band wireless 5G networks comprising the steps of:

   identifying a PIM source generating PIM interference;
   performing frequency analysis to determine a set of terms for modelling the PIM source;
   scoping sample rate, frequency offsets, non-linear functions, filtering, equalizer and model identification operations;
   detecting a presence of PIM interference in an UpLink (UL) signal and perform estimation delays;
   performing PIM identification (PIMI) on PIM coefficients to combine non-linear terms to match the detected PIM interference; and
   generating a filtered signal by performing real-time PIM cancellation (PIMC) by subtraction in the time-domain of the modelled PIM interference.

2. The method of claim 1, wherein the step of detecting a presence of PIM interference in an UL signal comprises using a Transmit (TX) signal as a direct input for cancellation modeling to minimize the bandwidth and the sample rates required for modelling PIM interference.

3. The method of claim 1, wherein each non-linear term is modelled separately using an existing baseband for a DownLink (DL) signal.

4. The method of claim 1, wherein

   PIMI and PIMC filtering is only performed on an UL band; and
   a cancellation sampling rate is decimated to mitigate processing complexity and reduce resource utilization.

5. The method of claim 4, wherein the step of performing PIM identification further includes the step of:
   performing UL band modelling to filter out an unwanted spectrum including a transition band and DownLink (DL) bands.

6. The method of claim 5, wherein the step of performing real-time PIM cancellation further includes the step of:
   performing down-sampling to remove data points from the filtered signal to reduce resource utilization.

7. The method of claim 1, wherein the step of detecting a presence of PIM interference in an UpLink (UL) signal and perform estimation delays further comprises:

   detecting a presence of PIM interference in at least two UL signals; and
   wherein the signal filtering includes applying two third-order intermodulation (IM3) terms and four fifth-order intermodulation (IM5) terms.

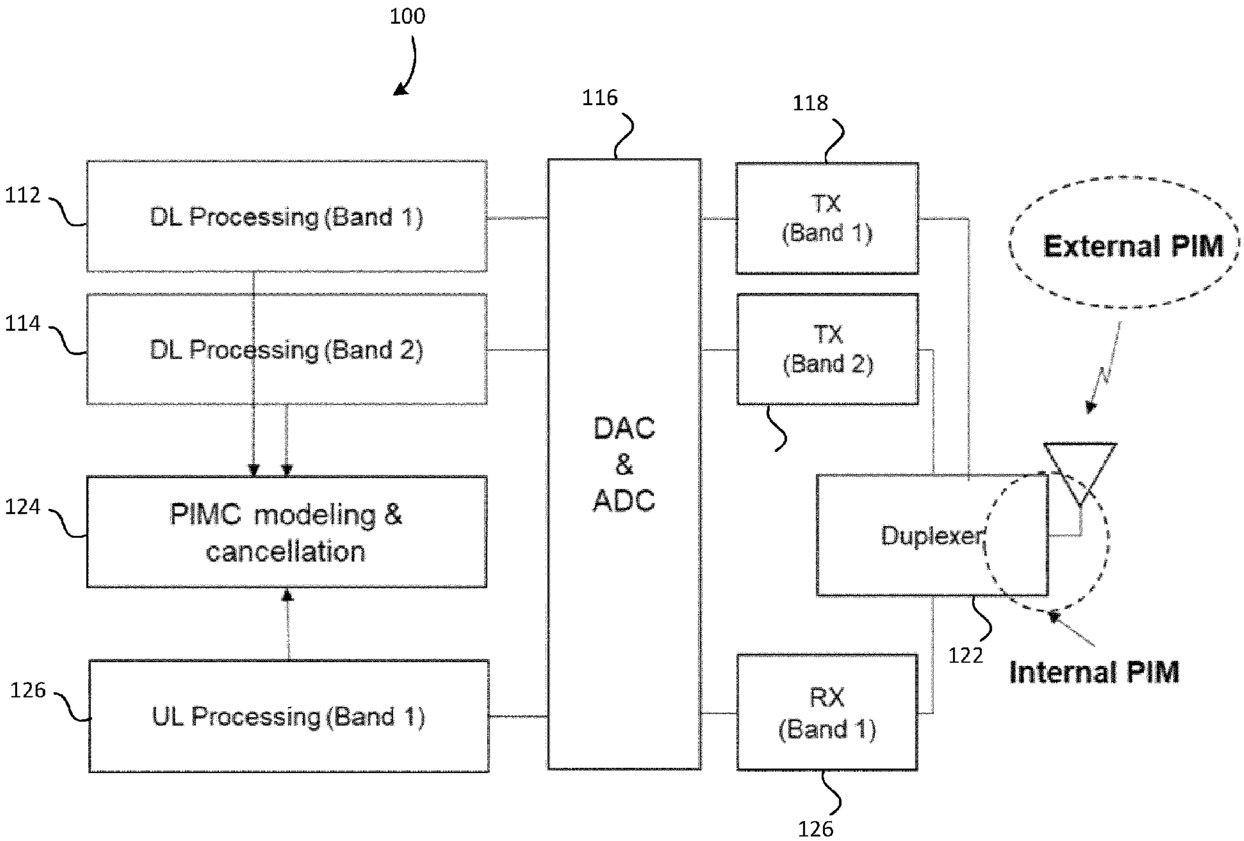
100
116
118
112
DL Processing (Band 1)
TX
(Band 1)
External PIM
114
DL Processing (Band 2)
TX
(Band 2)
DAC
&
ADC
124
PIMC modeling &
cancellation
Duplexer
122
Internal PIM
126
UL Processing (Band 1)
RX
(Band 1)
126

*FIG. 1*

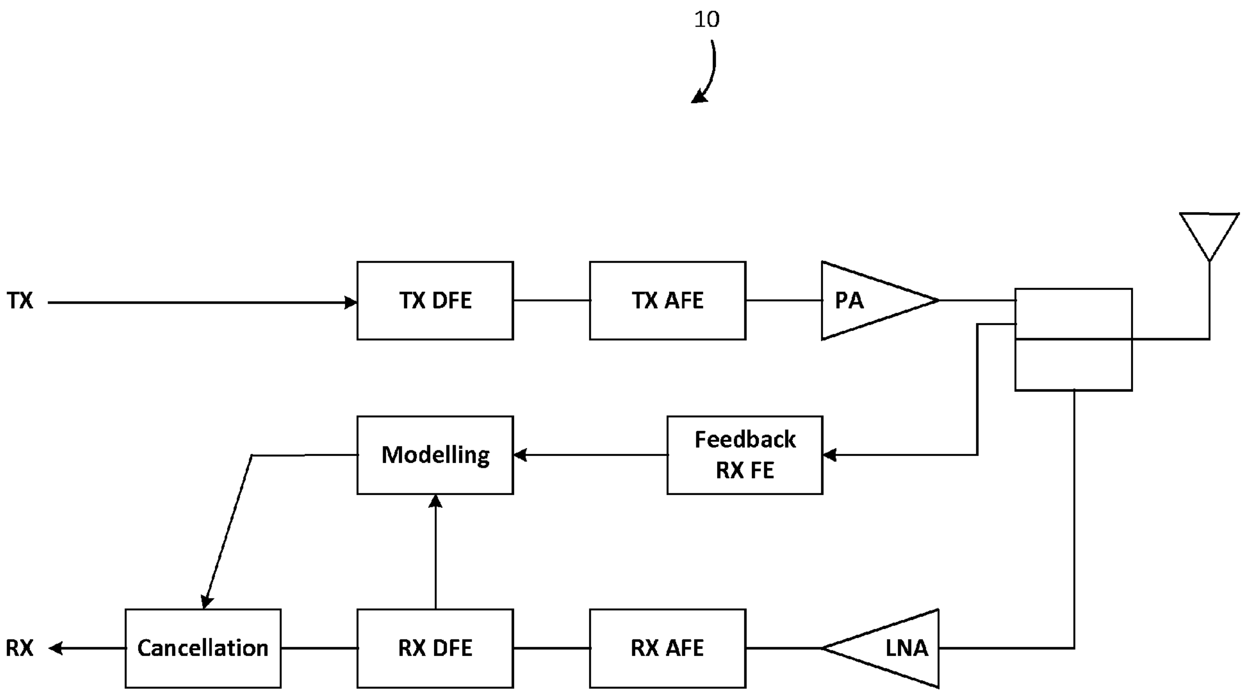


Prior Art

*FIG. 2A*

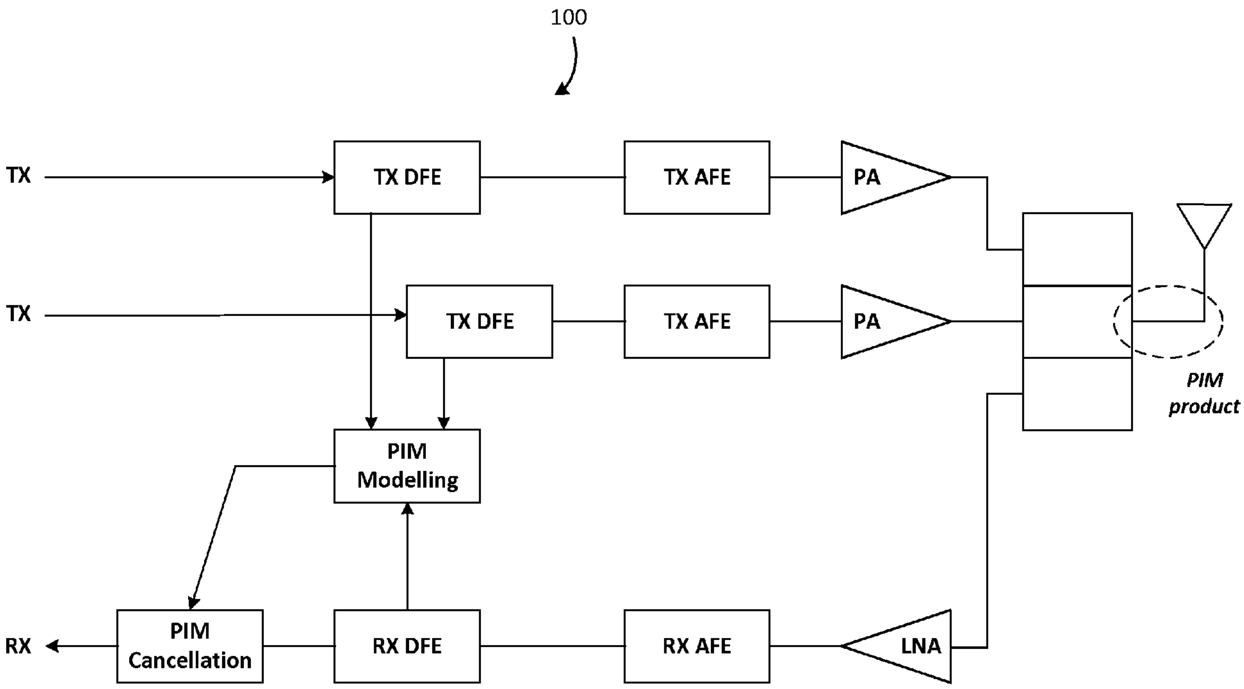
100
TX
TX DFE
TX AFE
PA
TX
TX DFE
TX AFE
PA
PIM product
PIM Modelling
RX
PIM Cancellation
RX DFE
RX AFE
LNA

*FIG. 2B*

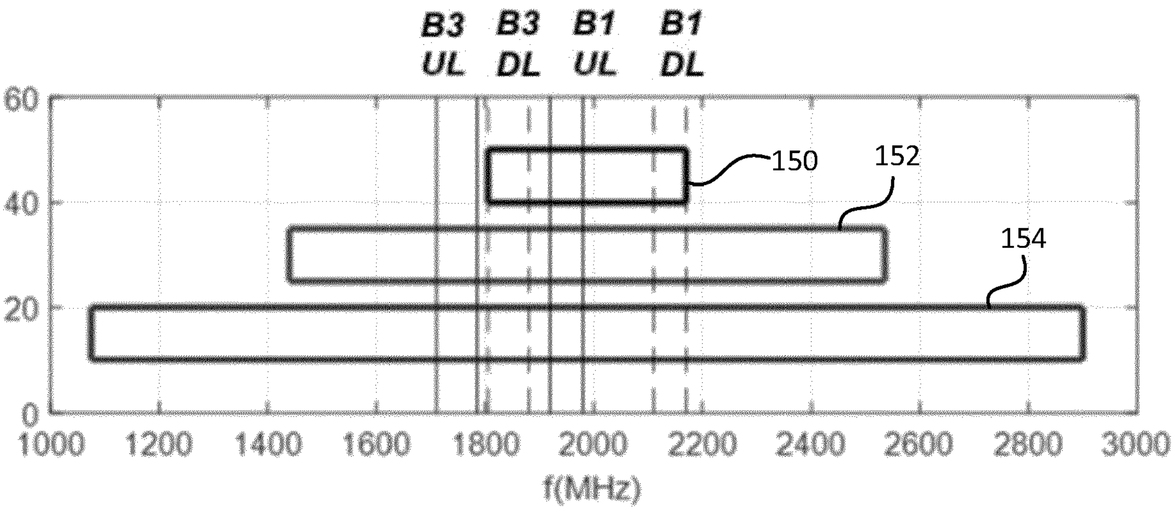
B3
UL
B3
DL
B1
UL
B1
DL
60
40
20
0
1000
1200
1400
1600
1800
2000
2200
2400
2600
2800
3000
f(MHz)
150
152
154

*FIG. 3A*

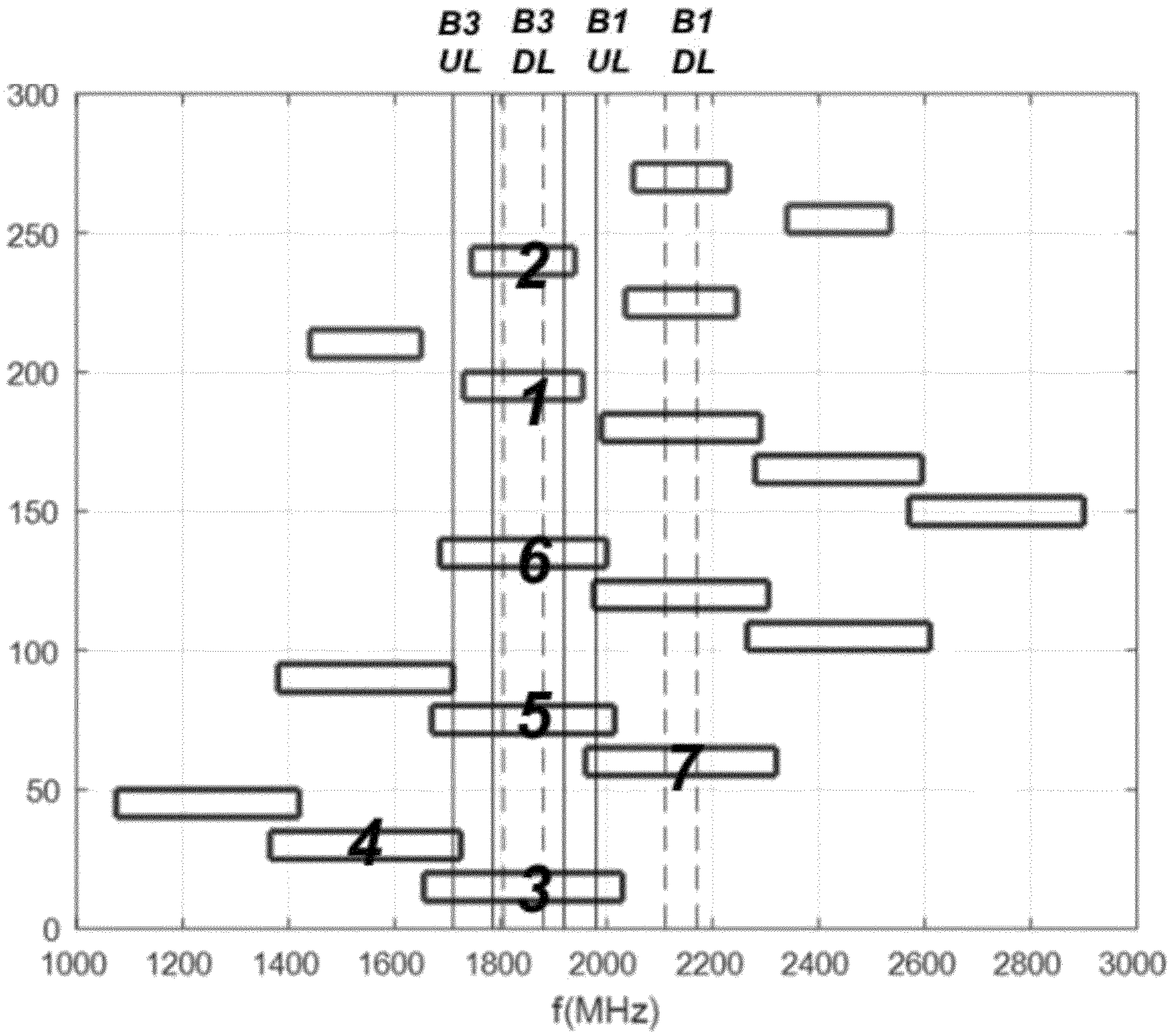
B3
UL
B3
DL
B1
UL
B1
DL
300
250
200
150
100
50
0
2
1
6
5
7
4
3
1000
1200
1400
1600
1800
2000
2200
2400
2600
2800
3000
f(MHz)

FIG. 3B

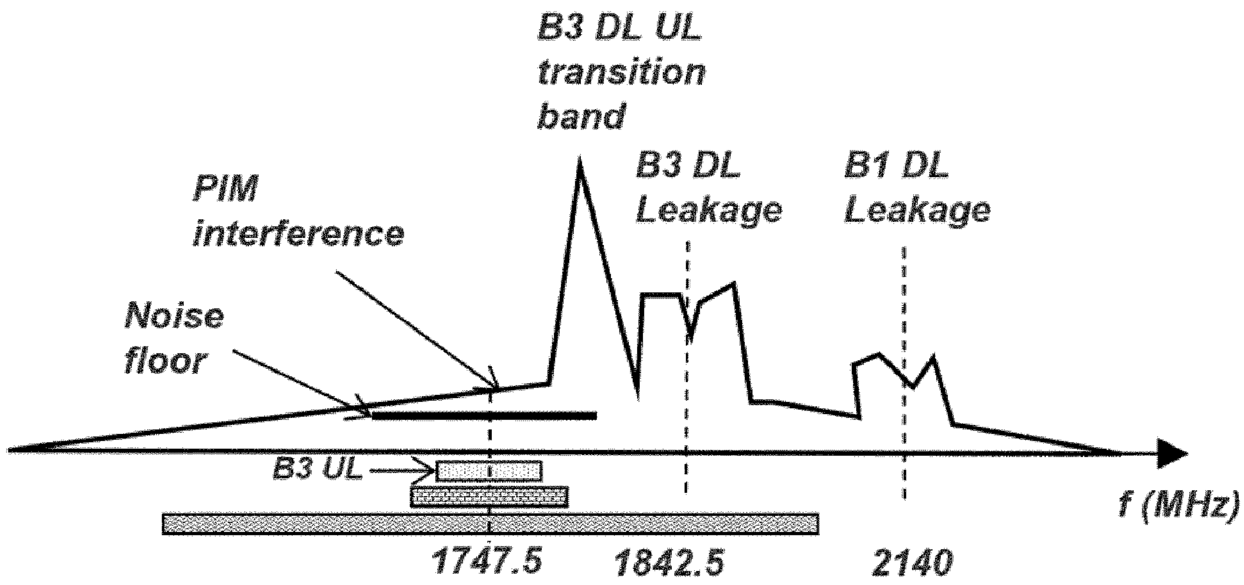
B3 DL UL
transition
band
B3 DL
Leakage
B1 DL
Leakage
PIM
interference
Noise
floor
B3 UL
f (MHz)
1747.5
1842.5
2140

FIG. 4

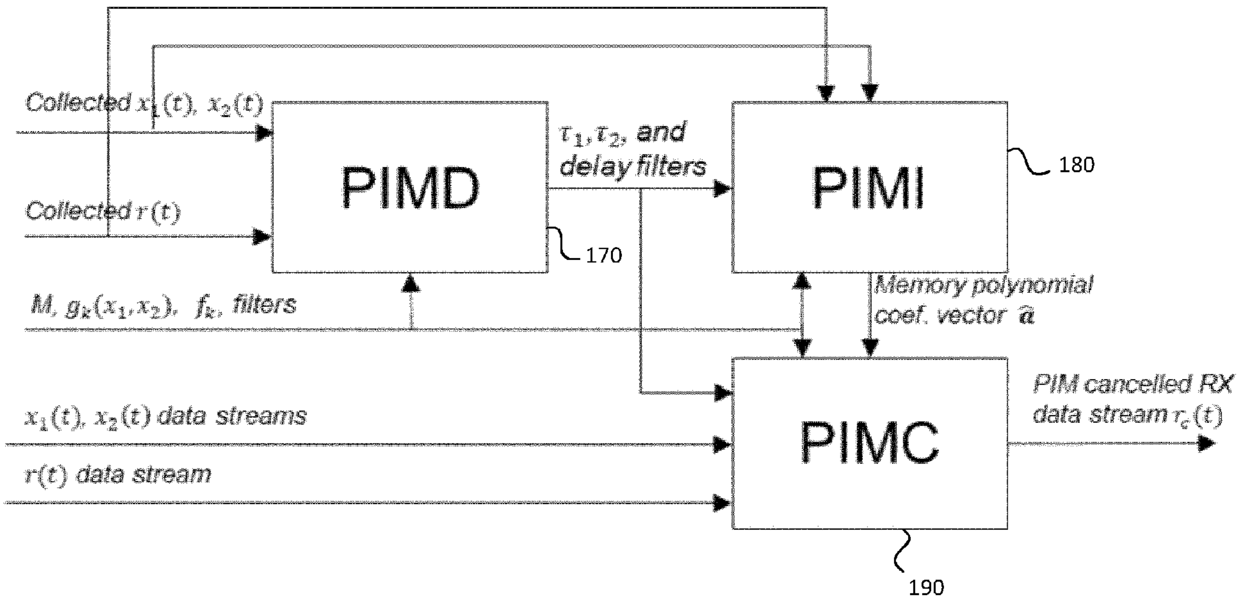
Collected $x_1(t)$, $x_2(t)$
Collected $r(t)$
PIMD
$\tau_1, \tau_2$, and delay filters
PIMI
180
170
$M$, $g_k(x_1, x_2)$, $f_k$, filters
Memory polynomial coef. vector $\hat{a}$
PIM cancelled RX data stream $r_c(t)$
$x_1(t)$, $x_2(t)$ data streams
$r(t)$ data stream
PIMC
190

*FIG. 5*

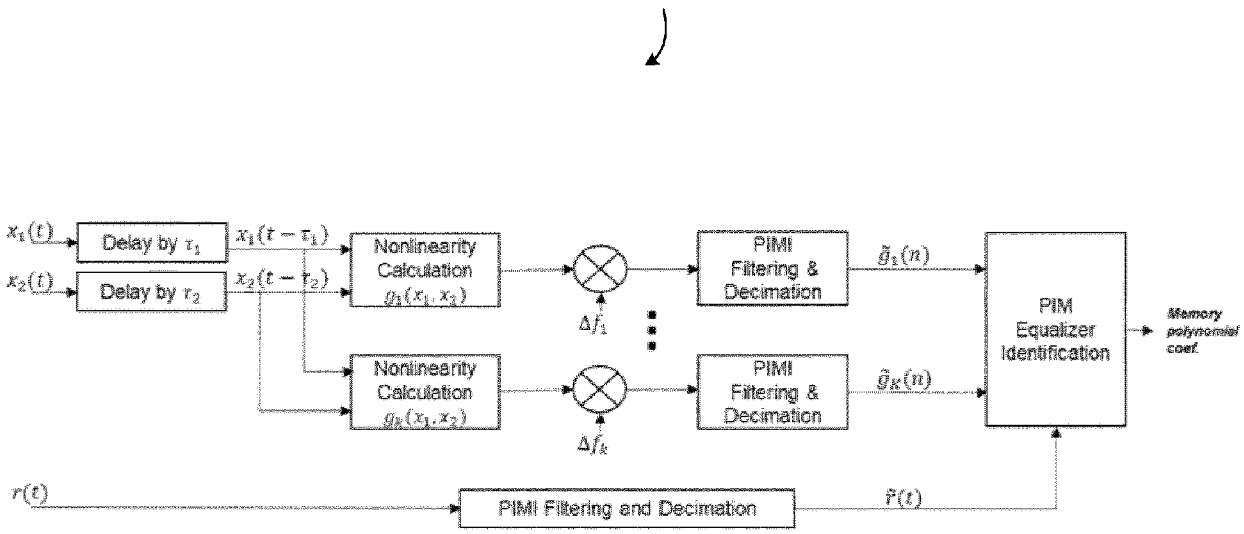
180
$x_1(t)$
Delay by $\tau_1$
$x_2(t)$
Delay by $\tau_2$
$x_1(t-\tau_1)$
$x_2(t-\tau_2)$
Nonlinearity Calculation $g_1(x_1, x_2)$
Nonlinearity Calculation $g_k(x_1, x_2)$
$\Delta f_1$
$\Delta f_k$
PIMI Filtering & Decimation
PIMI Filtering & Decimation
$\tilde{g}_1(n)$
$\tilde{g}_K(n)$
PIM Equalizer Identification
Memory polynomial coef.
$r(t)$
PIMI Filtering and Decimation
$\tilde{r}(t)$

*FIG. 6*

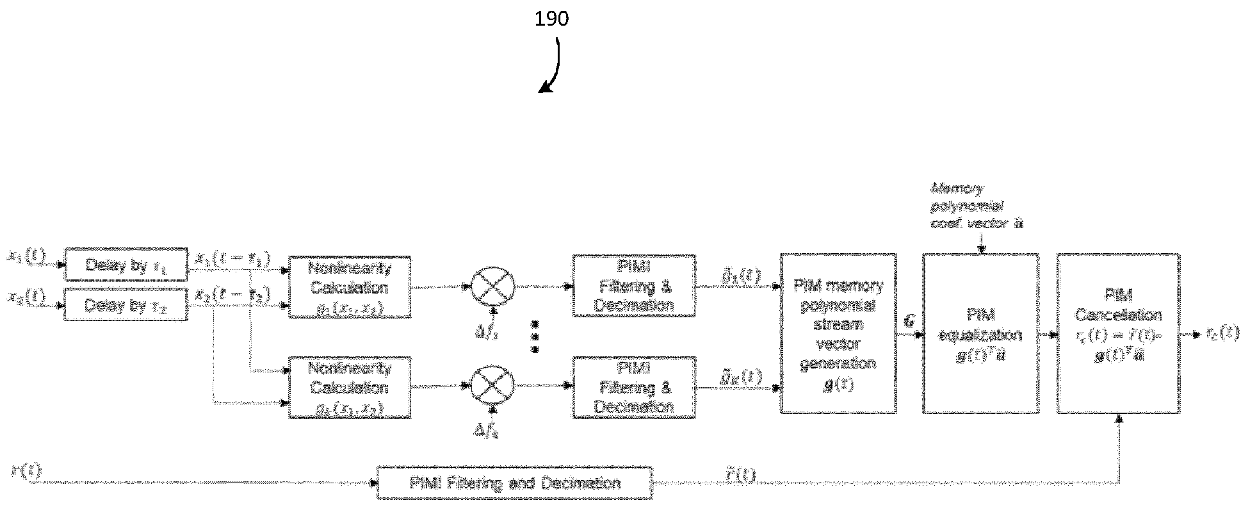
190
$x_1(t)$
Delay by $\tau_1$
$x_1(t-\tau_1)$
$x_2(t)$
Delay by $\tau_2$
$x_2(t-\tau_2)$
Nonlinearity Calculation $g_1(x_1,x_2)$
Nonlinearity Calculation $g_K(x_1,x_2)$
$\Delta f_1$
$\Delta f_K$
PIMI Filtering & Decimation
$\tilde{g}_1(t)$
$\tilde{g}_K(t)$
PIM memory polynomial stream vector generation $g(t)$
$G$
Memory polynomial coef. vector $\hat{a}$
PIM equalization $g(t)^T\hat{a}$
PIM Cancellation $r_c(t)=\tilde{r}(t)-g(t)^T\hat{a}$
$r_c(t)$
$r(t)$
PIMI Filtering and Decimation
$\tilde{r}(t)$

*FIG. 7*

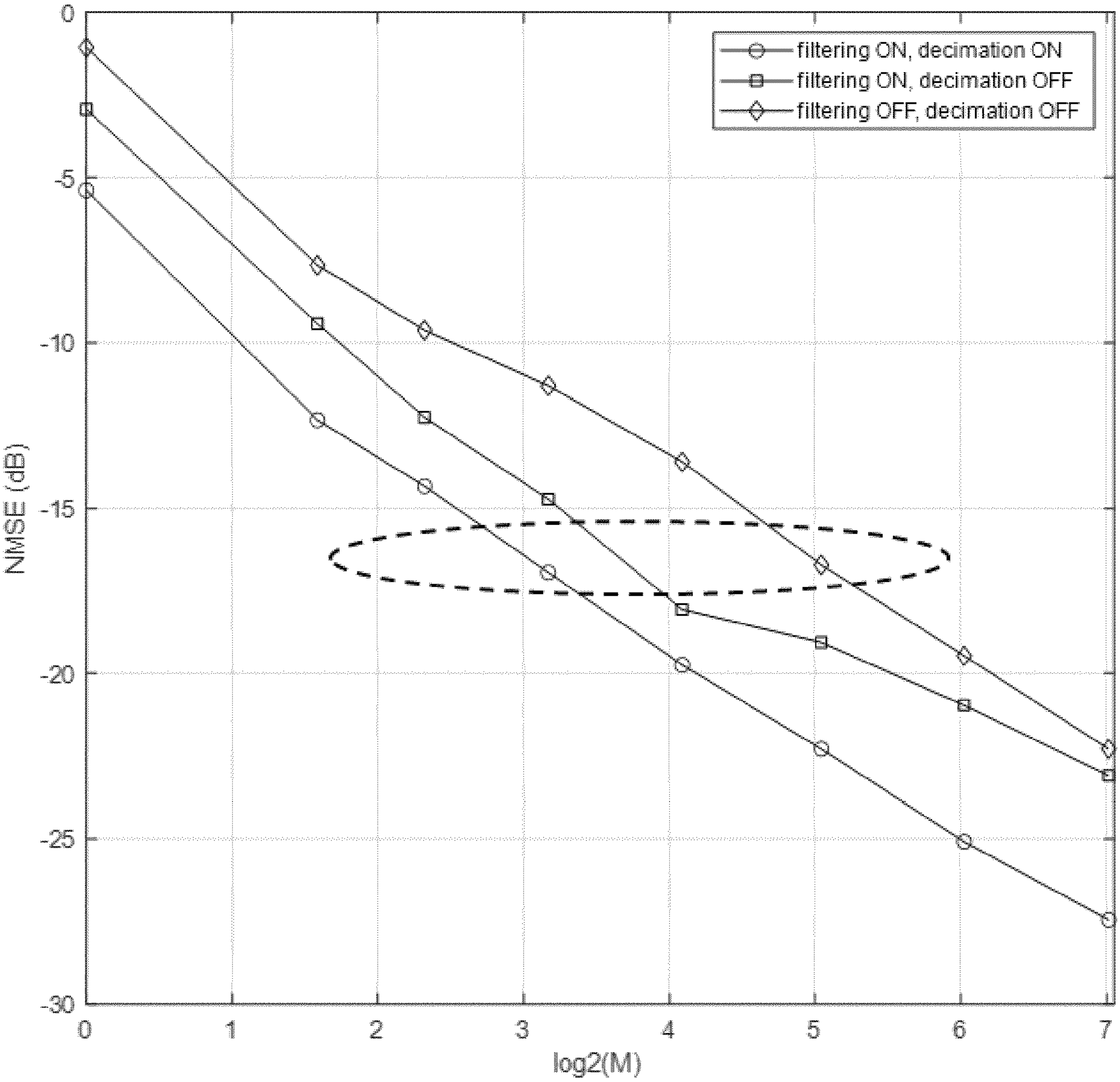

0
-5
-10
-15
-20
-25
-30
NMSE (dB)
0
1
2
3
4
5
6
7
log2(M)
filtering ON, decimation ON
filtering ON, decimation OFF
filtering OFF, decimation OFF


*FIG. 8*

European Patent Office

# EUROPEAN SEARCH REPORT

Application Number
EP 25 15 4172

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/286153 A1 (FLEISCHER MARKO [DE] ET AL) 8 September 2022 (2022-09-08)<br>* paragraph [0019] - paragraph [0057]; claims 1-14 *<br>* paragraph [0059] - paragraph [0114]; figures 1-8 *<br>* paragraph [0118] - paragraph [0120]; figure 10 *<br>* paragraph [0117]; figure 9 *<br>----- | 1-7 | INV.<br>H04B1/10<br>H04B1/12<br>H04B1/525 |
| X | US 2015/333784 A1 (BEVAN DAVID DAMIAN NICHOLAS [GB] ET AL)<br>19 November 2015 (2015-11-19)<br>* the whole document *<br>----- | 1-7 | |
| X | CN 107 453 782 A (BEIJING GALAXY XINTONG TECH CO LTD) 8 December 2017 (2017-12-08)<br>* the whole document *<br>----- | 1-7 | |
| | | | TECHNICAL FIELDS SEARCHED (IPC) |
| | | | H04B |

The present search report has been drawn up for all claims

1

| Place of search | Date of completion of the search | Examiner |
|---|---|---|
| Munich | 20 May 2025 | Ayala Perriello, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 15 4172

This annex lists the patent family members relating to the patent documents cited in the above-mentioned European search report. The members are as contained in the European Patent Office EDP file on
The European Patent Office is in no way liable for these particulars which are merely given for the purpose of information.

20-05-2025

| Patent document cited in search report | Publication date | Patent family member(s) | Publication date |
|---|---|---|---|
| US 2022286153 A1 | 08-09-2022 | CN 114424461 A | 29-04-2022 |
| | | EP 4032190 A1 | 27-07-2022 |
| | | US 2022286153 A1 | 08-09-2022 |
| | | WO 2021052566 A1 | 25-03-2021 |
| US 2015333784 A1 | 19-11-2015 | CN 104471862 A | 25-03-2015 |
| | | EP 2761761 A1 | 06-08-2014 |
| | | GB 2502279 A | 27-11-2013 |
| | | GB 2510997 A | 20-08-2014 |
| | | US 2013310023 A1 | 21-11-2013 |
| | | US 2013310090 A1 | 21-11-2013 |
| | | US 2015133111 A1 | 14-05-2015 |
| | | US 2015333784 A1 | 19-11-2015 |
| | | US 2016322995 A1 | 03-11-2016 |
| | | WO 2013175193 A1 | 28-11-2013 |
| CN 107453782 A | 08-12-2017 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2880767 B1
- US 13565167 B
- US 9026064 B2
- WO 2013175194 A2
- US 20130310090 A1